# EUROPEAN PATENT SPECIFICATION

(11) **EP 4 528 842 B1**
(45) Date of publication and mention of the grant of the patent: **25.11.2026**
(21) Application number: 23823636.8
(22) Date of filing: 24.05.2023
(51) Int. Cl.: H01M 4/133, H01G 11/06, H01G 11/38, H01G 11/50, H01M 4/62, H01M 10/0525, H01M 4/02

(54) **NEGATIVE ELECTRODE FOR ENERGY STORAGE DEVICE, AND ENERGY STORAGE DEVICE**
NEGATIVE ELEKTRODE FÜR ENERGIESPEICHERELEMENT UND ENERGIESPEICHERELEMENT
ÉLECTRODE NÉGATIVE POUR ÉLÉMENT DE STOCKAGE D'ÉNERGIE ET ÉLÉMENT DE STOCKAGE D'ÉNERGIE

(30) Priority: 13.06.2022 JP 2022094940
(43) Date of publication of application: 26.03.2025
(73) Proprietor: GS Yuasa International Ltd., Kyoto-shi, Kyoto 601-8520 (JP)
(72) Inventor: UEHARA, Naoki, Kyoto-shi, Kyoto 601-8520 (JP)
(74) Representative: Isarpatent
(86) International application number: PCT/JP2023/019234
(87) International publication number: WO 2023/243336

(56) References cited:
- WO-A1-2017/029902
- WO-A1-2021/187366
- WO-A1-2022/092106
- WO-A1-2022/092106
- JP-A- 2013 093 240
- JP-A- 2016 009 647
- JP-A- H04 342 966
- JP-A- S5 137 140

## Description

### TECHNICAL FIELD

The present invention relates to a negative electrode for an energy storage device, and an energy storage device.

### BACKGROUND ART

Nonaqueous electrolyte solution secondary batteries typified by lithium ion secondary batteries are, due to high energy density thereof, often used for electronic devices, such as a personal computer and a communication terminal, motor vehicles, and the like. On the other hand, as energy storage devices other than the nonaqueous electrolyte solution secondary batteries, for example, capacitors such as lithium ion capacitors and electric double-layer capacitors, and energy storage devices including electrolyte solutions other than nonaqueous electrolyte solutions are also widely used.

An electrode included in an energy storage device is generally one having a structure obtained by forming an active material layer, which contains an active material, on a surface of a substrate, such as a metal foil, having conductivity. A negative active material layer is formed by application and drying of a composite paste containing, for example, a negative active material such as graphite, a binder such as styrene-butadiene rubber (SBR), a thickener such as carboxymethyl cellulose (CMC), and a dispersion medium such as water (see Patent Document 1). JP2013093240A discloses a method for manufacturing a secondary battery electrode with low battery resistance.

### PRIOR ART DOCUMENT

### PATENT DOCUMENT

Patent Document 1: JP-A-2005-11808

### SUMMARY OF THE INVENTION

### PROBLEMS TO BE SOLVED BY THE INVENTION

An energy storage device is required to have a high coulombic efficiency. The coulombic efficiency is a ratio of discharge capacity to charge capacity. Inventors have gained knowledge that when an energy storage device has a high coulombic efficiency after being repetitively charged and discharged at a high current density, the energy storage device with suppressed metal deposition of reduced charge transport ions such as metallic lithium on a negative electrode surface tends to have high acceptance performance. Further, the energy storage device preferably has a low resistance from the viewpoint of input/output performance and the like.

An object of the present invention is to provide a negative electrode for an energy storage device, which is capable of increasing the coulombic efficiency and decreasing the resistance of an energy storage device, and to provide an energy storage device including such a negative electrode.

### MEANS FOR SOLVING THE PROBLEMS

The invention is defined in the appended claims. A negative electrode, according to one aspect of the present invention, for an energy storage device, includes a negative active material layer containing a negative active material, a cellulose derivative, and binder particles, the cellulose derivative having a peak top molecular weight of 2,800,000 or less, and the binder particles having an average circularity of 0.90 or more.

An energy storage device according to another aspect of the present invention includes the negative electrode, according to the one aspect of the present invention, for an energy storage device.

### ADVANTAGES OF THE INVENTION

According to one aspect of the present invention, it is possible to provide a negative electrode for an energy storage device, which is capable of increasing the coulombic efficiency and decreasing the resistance of the energy storage device, and an energy storage device including such a negative electrode.

### BRIEF DESCRIPTION OF THE DRAWINGS

Fig. 1 is a see-through perspective view illustrating one embodiment of an energy storage device.
Fig. 2 is a schematic view illustrating one embodiment of an energy storage apparatus formed by putting together a plurality of energy storage devices.

### MODE FOR CARRYING OUT THE INVENTION

First, an outline of a negative electrode for an energy storage device and the energy storage device disclosed in the present specification will be described.

[1] A negative electrode, according to one aspect of the present invention, for an energy storage device, includes a negative active material layer containing a negative active material, a cellulose derivative, and binder particles, the cellulose derivative having a peak top molecular weight of 2,800,000 or less, and the binder particles having an average circularity of 0.90 or more.

The negative electrode, according to [1], for an energy storage device is capable of increasing the coulombic efficiency and decreasing the resistance of an energy storage device. The reason therefor is not clear, but the following reason is presumed. A cellulose derivative having a low molecular weight has smaller steric hindrance than the steric hindrance of a cellulose derivative having a high molecular weight. Therefore, electron charge transport ions such as lithium ions easily move in a negative active material layer containing a cellulose derivative having a low molecular weight, and the coulombic efficiency is increased. On the other hand, the use of a cellulose derivative having a low molecular weight allows, due to small steric hindrance thereof, binder particles to easily move together with a dispersion medium to a surface of a negative composite paste during application and drying of the negative composite paste, and the resistance tends to be increased due to aggregation of the binder particles. The resistance of an energy storage device is considered to increase as a surface area of a negative active material coated with binder particles increases. Therefore, it is considered that even when binder particles with a high average circularity aggregate, they coat a relatively small area of the surface of a negative active material, which results in lower resistance. For the reasons described above, the negative electrode, according to [1], for an energy storage device, in which the cellulose derivative has a peak top molecular weight of 2,800,000 or less, and the binder particles have an average circularity of 0.90 or more is presumed to be capable of increasing the coulombic efficiency and decreasing the resistance of an energy storage device.

The negative electrode, according to one aspect of the present invention, for an energy storage device can also suppress metal deposition on a surface of the negative electrode after repetitive charge-discharge, the metal deposition being caused by reduction of electron charge transport ions of metal lithium or the likes, and thus increase the charge acceptance performance of an energy storage device.

The peak top molecular weight of the cellulose derivative is defined as a value determined by gel permeation chromatography (GPC) measurement performed according to the following procedure. A cellulose derivative (5 mg) to be measured is dissolved in water (5 mL) to obtain a solution. This solution is filtered with a hydrophilic PTFE (polytetrafluorethylene) membrane filter having a pore diameter of 0.45 µm, and the filtrate is subjected to GPC measurement. The molecular weight corresponding to a peak in a differential molecular weight distribution curve obtained by the GPC measurement is the peak top molecular weight. The GPC measurement conditions are as follows.

### [GPC measurement conditions]

Column/temperature: two columns x "OHpak SB-806M HQ", 8.0 mm x 30 cm (Shodex)/40°C
Mobile phase: 0.1 mol/dm³ aqueous NaCl solution
Flow rate: 1.0 mL/min
Injection volume: 100 µL
Detection: refractive index detector (RI)
Column calibration: monodisperse pullulan
Molecular weight calibration: relative calibration method (in terms of pullulan)
Measuring apparatus: dual pump "KP-22-13" (FLOM Corporation), auto injector "717plus" (Nihon Waters K.K.), differential refractive index detector "RI-101" (Shodex)
Analysis software: Empower 3 (Nihon Waters K.K.)

Here, a reason why the molecular weight of the cellulose derivative is specified by the peak top molecular weight will be described. When a filtrate to be subjected to GPC measurement is prepared by the method described above, insoluble matter of the cellulose derivative is sometimes removed in the filtration. Typically, a substance having a high molecular weight has low solubility in water and tends to be removed in the filtration. Therefore, a cellulose derivative containing more high-molecular-weight components is more removed than a cellulose derivative containing less high-molecular weight components, and thus the measured weight average molecular weight of the cellulose derivative containing more high-molecular-weight components becomes low even when the cellulose derivatives have the same actual weight average molecular weight. On the other hand, in the case of the peak top molecular weight, the measured peak top molecular weight is the same value even when a component having a molecular weight higher than the peak top molecular weight is removed in the filtration. Thus, the peak top molecular weight has less influence of the filtration on the measured value. For the reason described above, in the present invention that exerts effects by the cellulose derivative having a lower molecular weight, specifying the molecular weight of the cellulose derivative by the weight average molecular weight is inappropriate, and the molecular weight of the cellulose derivative is specified by the peak top molecular weight.

The "average circularity" of the binder particles is an average value of circularity of any twenty-five binder particles. The circularity of the binder particles is measured by image analysis based on scanning electron microscope (SEM) image of electron-stained binder particles when the binder particles have a carbon-carbon double bond (-CH=CH- bond) and when the binder particles have an ethylene unit (-CH₂-CH₂-). When the binder particles have neither a carbon-carbon double bond nor an ethylene unit, the circularity of the binder particles is measured by image analysis based on a scanning electron microscope-energy dispersive X-ray spectroscopy (SEM-EDX) image of the binder particles with respect to an element contained in the binder particles.

The SEM image of the binder particles is acquired by the following procedure.

### (1) Preparation of measurement sample

A negative electrode to be measured is electron-stained with osmium tetraoxide when the binder particles have a carbon-carbon double bond (-CH=CH- bond), and with ruthenium tetraoxide when the binder particles have an ethylene unit (-CH₂-CH₂-). A section of the sample that has been electron-stained is exposed by an ion milling method, and a measurement sample is produced. The negative electrode to be measured is prepared by the following procedure. When a negative electrode that has not been assembled into an energy storage device can be prepared, the negative electrode is used as it is. When a negative electrode is prepared from an assembled energy storage device, first, the energy storage device is subjected to constant current discharge at a current of 0.1 C to an end-of-discharge voltage under normal usage, and is thus brought to a discharged state. This discharged-state energy storage device is disassembled, and a negative electrode is taken out, sufficiently washed with dimethyl carbonate, and then dried at room temperature under reduced pressure. The work from the disassembly of an energy storage device to the preparation of a negative electrode to be measured is performed in a dry air atmosphere at a dew point of -40°C or lower. The term "under normal usage" means using the energy storage device by employing charge-discharge conditions recommended or specified for the energy storage device, and when equipment for using the energy storage device is prepared, the term refers to using the energy storage device by applying the equipment.

### (2) Acquisition of SEM image

For acquiring an SEM image, JSM-7001F (manufactured by JEOL Ltd.) is used as a scanning electron microscope. An SEM image, specifically a backscattered electron image is observed. The acceleration voltage is set to 5 kV. The observation magnification is set such that the number of binder particles appearing in one field of view is twenty-five or more and two hundred or less. The obtained SEM image is stored as an image file. Various conditions, other than the above, such as a spot diameter, a working distance, an irradiation current, luminance, and a focus are appropriately set so as to make the contours of the binder particles clear.

### (3) Image analysis

The obtained SEM image is subjected to image analysis, and the area and the peripheral length of each of any twenty-five binder particles are measured. The image analysis is performed using image analysis software PopImaging 6.00. Another type of software or the like enabling the same image analysis as this image analysis software may also be used. The circularity of each of the binder particles is calculated by the following equation, and the average value thereof is defined as the "average circularity" of the binder particles. $Circularity = \left(4π\times area of particle\right) / {\left(peripheral length of particle\right)}^{2}$

The SEM-EDX image of the binder particles is acquired by the following procedure.

### (1) Preparation of measurement sample

A measurement sample is produced similarly to the procedure (1) for acquiring an SEM image of the binder particles, except that no electron staining is performed.

### (2) Acquisition of SEM-EDX image

For acquiring an SEM-EDX image, JSM-IT500 (manufactured by JEOL Ltd.) is used as a scanning electron microscope. When the binder particles are polytetrafluoroethylene, polyvinylidene fluoride, or the like having neither a carbon-carbon double bond nor an ethylene unit, and containing fluorine, the measurement is performed with respect to elemental fluorine. When the element to be measured is unclear, first, qualitative analysis is performed and the measurement is performed with respect to, for example, an element detected more, other than carbon or oxygen, in comparison with an analysis result of a negative electrode containing styrene-butadiene rubber as the binder particles. In order to increase the spatial resolution, the acceleration voltage is set as low as possible but within range in which the element to be measured can be measured. The observation magnification is set such that the number of binder particles appearing in one field of view is twenty-five or more and two hundred or less. The obtained SEM-EDX image is stored as an image file. Various conditions, other than the above, such as a spot diameter, a working distance, an irradiation current, luminance, and a focus are appropriately set so as to make the contours of the binder particles clear.

### (3) Image analysis

The image analysis of the obtained SEM-EDX image is performed by measuring the area and the peripheral length of each of any twenty-five particles similarly to the procedure (3) of acquiring an SEM image of the binder particles The circularity of each of the binder particles is calculated by the following equation, and the average value thereof is defined as the "average circularity" of the binder particles. $Circularity = \left(4π\times area of particle\right) / {\left(peripheral length of particle\right)}^{2}$

[2] In the negative electrode, according to [1] above, for an energy storage device, the negative active material is a carbon material, and the negative active material layer may contain 90% by mass or more of the negative active material.

The negative electrode, according to [2] above, for an energy storage device is more certainly capable of increasing the coulombic efficiency and decreasing the resistance of an energy storage device.

[3] In the negative electrode, according to [1] or [2] above, for an energy storage device, the binder particles may include styrene-butadiene rubber particles.

The negative electrode, according to [3] above, for an energy storage device is more certainly capable of increasing the coulombic efficiency and decreasing the resistance of an energy storage device.

[4] The negative electrode, according to any one of [1] to [3] above, for an energy storage device, the cellulose derivative may contain carboxymethyl cellulose.

The negative electrode, according to [4] above, for an energy storage device is more certainly capable of increasing the coulombic efficiency and decreasing the resistance of an energy storage device.

[5] An energy storage device according to another aspect of the present invention includes the negative electrode, according to any one of [1] to [4] above, for an energy storage device.

The energy storage device according to [5] above includes the negative electrode, according to any one of [1] to [4] above, for an energy storage device and therefore has an increased coulombic efficiency and a decreased resistance.

Hereinafter, a negative electrode for an energy storage device, an energy storage device, an energy storage apparatus, and a method for manufacturing an energy storage device according to one embodiment of the present invention, and other embodiments will be described in detail. The names of constituent members (constituent elements) used in the embodiments are in some cases different from the names of the constituent members (constituent elements) used in BACKGROUND ART.

### <Negative electrode for energy storage device>

A negative electrode, according to one embodiment of the present invention, for an energy storage device (hereinafter, also referred to simply as a "negative electrode") includes a negative substrate and a negative active material layer disposed on the negative substrate directly or with an intermediate layer interposed therebetween. The negative electrode is a negative electrode used for an energy storage device such as a secondary battery.

The negative substrate has conductivity. It is determined whether or not the negative substrate has "conductivity" by using, as a threshold, a volume resistivity measured in accordance with JIS-H-0505 (1975) of 10⁻² Ω ·cm. Used as a material for the negative substrate is, for example, a metal such as copper, nickel, stainless steel, nickel-plated steel, and aluminum, or an alloy thereof, or a carbonaceous material. Among these materials, copper or a copper alloy is preferable. Examples of the negative substrate include a foil, a deposited film, a mesh, and a porous material, and a foil is preferable from the viewpoint of costs. Accordingly, the negative substrate is preferably a copper foil or a copper alloy foil. Examples of the copper foil include a rolled copper foil and an electrolytic copper foil.

The negative substrate has an average thickness of preferably 2 µm or more and 35 µm or less, more preferably 3 µm or more and 30 µm or less, still more preferably 4 µm or more and 25 µm or less, particularly preferably 5 µm or more and 20 µm or less. By setting the average thickness of the negative substrate to the above range, it is possible to increase the strength of the negative substrate and increase the energy density per volume of an energy storage device.

The intermediate layer is a layer disposed between the negative substrate and the negative active material layer. The intermediate layer contains a conductive agent such as carbon particles, and thereby reduces the contact resistance between the negative substrate and the negative active material layer. The composition of the intermediate layer is not particularly limited, and the intermediate layer contains, for example, a binder and a conductive agent.

The negative active material layer contains a negative active material, a cellulose derivative, and binder particles. The negative active material layer contains, as necessary, an optional component such as a conductive agent and a filler.

The negative active material can be appropriately selected from known negative active materials. As the negative active material for a lithium ion secondary battery, normally a material capable of storing and releasing lithium ions is used. Examples of the negative active material include metal Li; metals or metalloids such as Si and Sn; metal oxides or metalloid oxides such as a Si oxide, a Ti oxide, and a Sn oxide; titanium-containing oxides such as Li₄Ti₅O₁₂, LiTiO₂, and TiNb₂O₇; polyphosphoric acid compounds; silicon carbide; and carbon materials such as graphite and non-graphitic carbon (easily graphitizable carbon or hardly graphitizable carbon). Among these materials, graphite and non-graphitic carbon are preferable, and graphite is more preferable. In the negative active material layer, one of these materials may be used alone, or two or more thereof may be used in mixture.

The term "graphite" refers to a carbon material in which the average lattice spacing (d₀₀₂) of the (002) plane determined by an X-ray diffraction method before charge-discharge or in a discharge state is 0.33 nm or more and less than 0.34 nm. Examples of the graphite include natural graphite and artificial graphite. Artificial graphite is preferable from the viewpoint that a material having stable physical properties can be obtained.

The term "non-graphitic carbon" refers to a carbon material in which the average lattice spacing (d₀₀₂) of the (002) plane determined by an X-ray diffraction method before charge-discharge or in a discharged state is 0.34 nm or more and 0.42 nm or less. Examples of the non-graphitic carbon include hardly graphitizable carbon and easily graphitizable carbon. Examples of the non-graphitic carbon include a resin-derived material, petroleum pitch or a material derived from petroleum pitch, petroleum coke or a material derived from petroleum coke, a plant-derived material, and an alcohol-derived material.

Here, the "discharged state" of the carbon material that is the negative active material means a state of the carbon material that is the negative active material and which is discharged so as to sufficiently release therefrom lithium ions that can be stored and released in association with charge and discharge. For example, the "discharged state" of a half cell that includes, as a working electrode, a negative electrode containing a carbon material as a negative active material, and includes metal Li as a counter electrode is a state where the cell has an open circuit voltage of 0.7 V or higher.

The term "hardly graphitizable carbon" refers to a carbon material in which the d₀₀₂ is 0.36 nm or more and 0.42 nm or less.

The term "easily graphitizable carbon" refers to a carbon material in which the d₀₀₂ is 0.34 nm or more and less than 0.36 nm.

The negative active material is normally particles (powder). The average particle size of the negative active material can be set to, for example, 1 nm or more and 100 µm or less. When the negative active material is a carbon material, a titanium-containing oxide, or a polyphosphoric acid compound, the average particle size of the negative active material may be 1 µm or more and 100 µm or less. When the negative active material is Si, Sn, a Si oxide, a Sn oxide, or the like, the average particle size of the negative active material may be 1 nm or more and 1 µm or less. By setting the average particle size of the negative active material to the above lower limit or more, the negative active material is easily manufactured or handled. By setting the average particle size of the negative active material to the above upper limit or less, the electron conductivity of the negative active material layer is improved. The "average particle size" of the negative active material and a positive active material described later means a value corresponding to 50% in a volume-based cumulative distribution calculated in accordance with JIS-Z-8819-2 (2001) on the basis of a particle size distribution obtained by measuring a diluted solution, which is obtained by diluting particles with a solvent, by a laser diffraction/scattering method in accordance with JIS-Z-8825 (2013).

In order to obtain a powder having a prescribed particle size, a crusher, a classifier, or the like is used. Examples of a crushing method include a method of using a mortar, a ball mill, a sand mill, a vibratory ball mill, a planetary ball mill, a jet mill, a counter jet mill, a whirling airflow-type jet mill, a sieve, or the like. Wet crushing in which crushing is performed in the presence of both a powder, and water or an organic solvent such as hexane can also be used. As a classification method, a sieve, a wind force classifier, or the like is used as necessary for both dry and wet crushing methods.

The content of the negative active material in the negative active material layer is preferably 60% by mass or more and 99% by mass or less, more preferably 90% by mass or more and 98% by mass or less, and is still more preferably 95% by mass or more in some cases. By setting the content of the negative active material to the above range, both high energy density and manufacturability of the negative active material layer can be achieved.

The cellulose derivative is normally a component that functions as a thickener for forming the negative active material layer by application or the like of a negative composite paste.

The cellulose derivative is a compound having a structure in which at least a part of hydrogen atoms of hydroxy groups of cellulose is substituted with another group. Examples of the cellulose derivative include a carboxyalkyl cellulose (carboxymethyl cellulose (CMC), carboxyethyl cellulose, carboxypropyl cellulose, and the like), an alkyl cellulose (methyl cellulose, ethyl cellulose, and the like), a hydroxyalkyl cellulose (hydroxyethyl cellulose, hydroxypropyl cellulose, hydroxyethyl methyl cellulose, hydroxypropyl methyl cellulose, and the like), cellulose acetate phthalate, hydroxypropyl methyl cellulose phthalate, and acetyl cellulose. Among these examples, a carboxyalkyl cellulose is preferable, and CMC is more preferable. One of the cellulose derivatives may be used alone, or two or more thereof may be used in combination.

A part or the entire part of the cellulose derivative may be present in a state of a salt. Examples of a form of the salt include an alkali metal salt (for example, a sodium salt), and an ammonium salt.

The upper limit of the peak top molecular weight of the cellulose derivative is 2,800,000, preferably 2,700,000, more preferably 2,600,000. By the cellulose derivative having a peak top molecular weight of the above upper limit or less, the coulombic efficiency of an energy storage device can be increased. The lower limit of the peak top molecular weight of the cellulose derivative is preferably 100,000, more preferably 200,000, still more preferably 500,000, even more preferably 1,000,000, 1,500,000, or 2,000,000. By the cellulose derivative having a peak top molecular weight of the above lower limit or more, it is possible to impart sufficient viscosity to a negative composite paste for forming the negative active material layer, and efficiently form the negative active material layer. In addition, when the cellulose derivative has a peak top molecular weight of the above lower limit or more, appropriate steric hindrance of the cellulose derivative can suppress aggregation of the binder particles. Along with this suppression, a more uniform negative active material layer is formed and the adhesiveness between the negative active material layer and the negative substrate is improved, and as a result, an energy storage device having excellent charge-discharge cycle performance can be provided. Further, by the cellulose derivative having a peak top molecular weight of the above lower limit or more, the resistance of an energy storage device can be decreased. The peak top molecular weight of the cellulose derivative may be in a range between any one of the above lower limits and any one of the above upper limits (both inclusive).

The content of the cellulose derivative in the negative active material layer is not particularly limited, and may be, for example, 0.1% by mass or more and 10% by mass or less, and is preferably 0.2% by mass or more and 5% by mass or less, more preferably 0.3% by mass or more and 4% by mass or less, still more preferably 0.4% by mass or more and 3% by mass or less, even more preferably 0.5% by mass or more and 2% by mass or less, even more preferably 0.8% by mass or more and 1.5% by mass or less. By the content of the cellulose derivative being the above lower limit or more, it is possible to impart sufficient viscosity to a negative composite paste for forming the negative active material layer, and efficiently form the negative active material layer. On the other hand, by the content of the cellulose derivative being the above upper limit or less, electron charge transport ions more easily move in the negative active material layer, and the coulombic efficiency is further increased.

The binder particles are particles of a binder. In other words, a binder is present in a particulate state in the negative active material layer. Examples of the binder constituting the binder particles include: thermoplastic resins such as a fluororesin (polytetrafluoroethylene (PTFE), polyvinylidene fluoride (PVDF), and the like), polyethylene, polypropylene, polyacrylic, and a polyimide; and elastomers such as ethylene-propylene-diene rubber (EPDM), sulfonated EPDM, styrene-butadiene rubber (SBR), and fluororubber. Among these examples, an elastomer is preferable, and SBR is more preferable.

The lower limit of the average circularity of the binder particles is 0.90, preferably 0.91, more preferably 0.92. By the binder particles having an average circularity of the above lower limit or more, the area of a surface of the negative active material coated with the binder particles is reduced, and the resistance of an energy storage device can be decreased. On the other hand, the upper limit of the average circularity of the binder particles may be 1.00, and may also be 0.99, 0.97, 0.95, or 0.94. The average circularity of the binder particles may be in a range between any one of the above lower limits and any one of the above upper limits (both inclusive).

The average circularity of the binder particles is controlled, for example, by the type, the degree of polymerization, the glass transition point, the manufacturing conditions, or the like of the binder used. For example, a binder having a high degree of polymerization or a binder having a high glass transition point tends to increase the average circularity. A commercially available product may also be used as the binder. For example, various commercially available binders are used to respectively form negative active material layers, the average circularity of the binder particles in each of the negative active material layers is measured, and the binder that gives an average circularity of 0.90 or more may be selected and used. When the pressing pressure is high in the formation of the negative active material layer, the binder particles are pushed down and tend to decrease the average circularity thereof.

The binder particles have an average particle size of preferably 50 nm or more and 500 nm or less, more preferably 100 nm or more and 400 nm or less, still more preferably 150 nm or more and 300 nm or less. When the binder particles have an average particle size in the above range, it is possible to further increase the coulombic efficiency and further decrease the resistance of an energy storage device. The average particle size of the binder particles is defined as an average value of equivalent circle diameters of any twenty-five binder particles in an SEM image used to determine the average circularity.

The content of the binder particles in the negative active material layer is preferably 0.1% by mass or more and 10% by mass or less, more preferably 0.2% by mass or more and 5% by mass or less, still more preferably 0.3% by mass or more and 3% by mass or less, even more preferably 0.5% by mass or more and 2% by mass or less. By setting the content of the binder particles to the above range, the negative active material can be stably held. By the content of the binder particles being the above lower limit or more, the adhesiveness between the negative active material and the negative substrate, or among portions of the negative active material is increased and the manufacturability can be secured. On the other than, by the content of the binder particles being the above upper limit or less, electron charge transport ions more easily move in the negative active material layer, and the coulombic efficiency is further increased. Normally, the content of the binder particles in the negative active material layer equals the content of the binder in the negative active material layer.

The conductive agent is not particularly limited as long as the conductive agent is a material having conductivity. Examples of such a conductive agent include a carbonaceous material, a metal, and a conductive ceramic. Examples of the carbonaceous material include graphite, non-graphitic carbon, and graphene-based carbon. Examples of the non-graphitic carbon include carbon nanofibers, pitch-based carbon fibers, and carbon black. Examples of the carbon black include furnace black, acetylene black, and ketjen black. Examples of the graphene-based carbon include graphene, a carbon nanotube (CNT), and a fullerene. Examples of a form of the conductive agent include a powdery form and a fibrous form. As the conductive agent, one of these materials may be used alone, or two or more thereof may be used in mixture. These materials may be used in a composite form. For example, a composite material of carbon black and a CNT may be used. Among these examples, carbon black is preferable from the viewpoint of electron conductivity and coatability, and in particular, acetylene black is preferable.

When the conductive agent is contained in the negative active material layer, the content of the conductive agent in the negative active material layer is, for example, 1% by mass or more and 10% by mass or less. The content of the conductive agent in the negative active material layer may be 5% by mass or less, 2% by mass or less, 1% by mass or less, 0.1% by mass or less, or 0% by mass.

The filler is not particularly limited. Examples of the filler include polyolefins such as polypropylene and polyethylene, inorganic oxides such as silicon dioxide, alumina, titanium dioxide, calcium oxide, strontium oxide, barium oxide, magnesium oxide, and aluminosilicate, hydroxides such as magnesium hydroxide, calcium hydroxide, and aluminum hydroxide, carbonates such as calcium carbonate, hardly soluble ionic crystals such as calcium fluoride, barium fluoride, and barium sulfate, nitrides such as aluminum nitride and silicon nitride, and substances derived from mineral resources, such as talc, montmorillonite, boehmite, zeolite, apatite, kaolin, mullite, spinel, olivine, sericite, bentonite, and mica, or artificial products thereof.

When the filler is contained in the negative active material layer, the content of the filler in the negative active material layer is, for example, 0.1% by mass or more and 5% by mass or less. The content of the filler in the negative active material layer may be 1% by mass or less, 0.1% by mass or less, or 0% by mass.

The negative active material layer may contain a typical nonmetal element such as B, N, P, F, Cl, Br, and I, a typical metal element such as Li, Na, Mg, Al, K, Ca, Zn, Ga, Ge, Sn, Sr, and Ba, or a transition metal element such as Sc, Ti, V, Cr, Mn, Fe, Co, Ni, Cu, Mo, Zr, Ta, Hf, Nb, and W as a component other than the negative active material, the cellulose derivative, the binder particles, the conductive agent, and the filler.

The density of the negative active material layer is preferably 1.1 g/cm³ or more and 1.7 g/cm³ or less, more preferably 1.2 g/cm³ or more and 1.6 g/cm³ or less, still more preferably 1.3 g/cm³ or more and 1.5 g/cm³ or less. By the density of the negative active material layer being the above lower limit or more, the energy density of an energy storage device can be increased. Normally, when the density of the negative active material layer is high, gaps in the negative active material layer are narrow and the negative active material layer is susceptible to the influence of steric hindrance of the cellulose derivative. Accordingly, when the density of the negative active material layer is the above lower limit or more, the effect of the present invention is particularly remarkably generated, the effect being to increase the coulombic efficiency by using a cellulose derivative having a low peak top molecular weight to reduce the steric hindrance of the cellulose derivative. By the density of the negative active material layer being the above upper limit or less, electron charge transport ions more easily move in the negative active material layer, and the coulombic efficiency is further increased. The density of the negative active material layer can be adjusted, for example, by the strength of pressing the negative active material layer in a manufacturing process of the negative electrode.

The "density" (g/cm³) of the negative active material layer is a value calculated from the mass per area of the negative active material layer and the average thickness of the negative active material layer. That is, the "density" of the negative active material layer is apparent density. The average thickness of the negative active material layer is defined as an average value of thicknesses measured at any five locations. When the negative active material layer is formed on both surfaces of the negative substrate, the mass per area and the average thickness of the negative active material layer formed on either one of the surfaces of the negative substrate are considered.

The negative electrode can be manufactured, for example, by applying a negative composite paste to a negative substrate directly or with an intermediate layer interposed therebetween, and drying the negative composite paste. After the drying, pressing or the like may be performed as necessary. The negative composite paste contains components, such as the negative active material, the cellulose derivative, and the binder particles, constituting the negative active material layer. The negative composite paste normally further contains a dispersion medium. Preferably used as the dispersion medium is a dispersion medium in which the binder particles have a low solubility, typically such a dispersion medium that the solving amount of the binder particles is less than 1 part by mass relative to 100 parts by mass of the dispersion medium at 20°C.

### <Energy storage device>

An energy storage device according to one embodiment of the present invention includes: an electrode assembly including a positive electrode, a negative electrode, and a separator; an electrolyte; and a case that houses the electrode assembly and the electrolyte. The electrode assembly is normally a stacked type assembly that includes a plurality of positive electrodes and a plurality of negative electrodes stacked with separators interposed therebetween, or a wound type assembly that includes stacked positive and negative electrodes wound with a separator interposed therebetween. The electrolyte is present while impregnated into the positive electrode, the negative electrode, and the separator. As one example of the energy storage device, a nonaqueous electrolyte secondary battery (hereinafter, also referred to simply as a "secondary battery") including a nonaqueous electrolyte as the electrolyte will be described.

### (Positive electrode)

The positive electrode includes a positive substrate and a positive active material layer disposed on the positive substrate directly or with an intermediate layer interposed therebetween. The composition of the intermediate layer is not particularly limited, and, for example, can be selected from the compositions exemplified above for the negative electrode.

The positive substrate has conductivity. Used as a material for the positive substrate is a metal, such as aluminum, titanium, tantalum, and stainless steel, or an alloy thereof. Among these materials, aluminum or an aluminum alloy is preferable from the viewpoints of electric potential resistance, high conductivity, and costs. Examples of the positive substrate include a foil, a deposited film, a mesh, and a porous material, and a foil is preferable from the viewpoint of costs. Accordingly, the positive substrate is preferably an aluminum foil or an aluminum alloy foil. Examples of the aluminum or aluminum alloy include A1085, A3003, and A1N30 specified in JIS-H-4000 (2014) or JIS-H-4160 (2006).

The positive substrate has an average thickness of preferably 3 µm or more and 50 µm or less, more preferably 5 µm or more and 40 µm or less, still more preferably 8 µm or more and 30 µm or less, particularly preferably 10 µm or more and 25 µm or less. By setting the average thickness of the positive substrate to the above range, it is possible to increase the strength of the positive substrate and increase the energy density per volume of the energy storage device.

The positive active material layer includes a positive active material. The positive active material layer contains, as necessary, an optional component such as a conductive agent, a binder, a thickener, and a filler. The conductive agent, the filler, and the like as optional components can be selected from the materials exemplified above for the negative electrode. The binder can be selected from the materials exemplified as the binder constituting the binder particles contained in the negative active material layer. Examples of the thickener include the cellulose derivatives described above and contained in the negative active material layer.

The positive active material can be appropriately selected from known positive active materials. As the positive active material for a lithium ion secondary battery, normally a material capable of storing and releasing lithium ions is used. Examples of the positive active material include a lithium-transition metal composite oxide having an α-NaFeO₂-type crystal structure, a lithium-transition metal composite oxide having a spinel-type crystal structure, a polyanion compound, a chalcogenide, and sulfur. Examples of the lithium-transition metal composite oxide having an α-NaFeO₂-type crystal structure include Li[LiₓNi₍₁₋ₓ₎]O₂ (0 ≤ x < 0.5), Li[LiₓNi_{γ}Co_{(1-x-γ)}]O₂ (0 ≤ x < 0.5, 0 < γ < 1, 0 < 1-x-y), Li[LiₓCo₍₁₋ₓ₎]O₂ (0 ≤ x < 0.5), Li[LiₓNi_{γ}Mn_{(1-x-γ)}]O₂ (0 ≤ x < 0.5, 0 < γ < 1, 0 < 1-x-y), Li[LiₓNi_{γ}Mn_{β}Co_{(1-x-γ-β)}]O₂ (0 ≤ x < 0.5, 0 < y, 0 < B, 0.5 < γ + β < 1, 0 < 1-x-γ-B), and Li[LiₓNi_{γ}Co_{β}Al_{(1-x-γ-β)}]O₂ (0 ≤ x < 0.5, 0 < y, 0 < B, 0.5 < γ + β < 1, 0 < 1-x-γ-β). Examples of the lithium-transition metal composite oxide having a spinel-type crystal structure include LiₓMn₂O₄ and LiₓNi_{γ}Mn_{(2-γ)}O₄. Examples of the polyanion compound include LiFePO₄, LiMnPO₄, LiNiPO₄, LiCoPO₄, Li₃V₂(PO₄)₃, Li₂MnSiO₄, and Li₂CoPO₄F. Examples of the chalcogenide include titanium disulfide, molybdenum disulfide, and molybdenum dioxide. A part of the atoms or the polyanions in these materials may be substituted with an atom or an anion species of another element. These materials may have a surface thereof coated with another material. In the positive active material layer, one of these materials may be used alone, or two or more thereof may be used in mixture.

The positive active material is normally a particle (powder). The average particle size of the positive active material is preferably set to, for example, 0.1 µm or more and 20 µm or less. By setting the average particle size of the positive active material to the above lower limit or more, the positive active material is easily manufactured or handled. By setting the average particle size of the positive active material to the above upper limit or less, the electron conductivity of the positive active material layer is improved. In the case of using a composite of the positive active material and another material, the average particle size of the composite is defined as the average particle size of the positive active material. In order to obtain a powder having a prescribed particle size, a crusher, a classifier, or the like is used. The crushing method and the classification method can be selected from, for example, the methods exemplified above for the negative electrode.

The content of the positive active material in the positive active material layer is preferably 50% by mass or more and 99% by mass or less, more preferably 70% by mass or more and 98% by mass or less, still more preferably 80% by mass or more and 95% by mass or less. By setting the content of the positive active material to the above range, both high energy density and manufacturability of the positive active material layer can be achieved.

The content of the conductive agent in the positive active material layer is preferably 1% by mass or more and 10% by mass or less, more preferably 3% by mass or more and 9% by mass or less. By setting the content of the conductive agent to the above range, the energy density of the energy storage device can be increased.

The content of the binder in the positive active material layer is preferably 1% by mass or more and 10% by mass or less, more preferably 3% by mass or more and 9% by mass or less. By setting the content of the binder to the above range, the positive active material can be stably held.

When a thickener is contained in the positive active material layer, the content of the thickener in the positive active material layer is, for example, 0.1% by mass or more and 10% by mass or less. The content of the thickener in the positive active material layer may be 5% by mass or less, 2% by mass or less, 1% by mass or less, 0.1% by mass or less, or 0% by mass.

When a filler is contained in the positive active material layer, the content of the filler in the positive active material layer is, for example, 0.1% by mass or more and 5% by mass or less. The content of the filler in the positive active material layer may be 1% by mass or less, 0.1% by mass or less, or 0% by mass.

The positive active material layer may contain a typical nonmetal element such as B, N, P, F, Cl, Br, and I, a typical metal element such as Li, Na, Mg, Al, K, Ca, Zn, Ga, Ge, Sn, Sr, and Ba, or a transition metal element such as Sc, Ti, V, Cr, Mn, Fe, Co, Ni, Cu, Mo, Zr, Nb, and W as a component other than the positive active material, the conductive agents, the binder, the thickener, and the filler.

The positive electrode can be manufactured, for example, by applying a positive composite paste to a positive substrate directly or with an intermediate layer interposed therebetween, and drying the positive composite paste. After the drying, pressing or the like may be performed as necessary. The positive composite paste contains components, such as the positive active material and an optional component, e.g., the conductive agent and the binder, constituting the positive active material layer. The positive composite paste normally further contains a dispersion medium.

### (Negative electrode)

The negative electrode included in the energy storage device is the negative electrode described above as the negative electrode, according to one embodiment of the present invention, for an energy storage device.

### (Separator)

The separator can be appropriately selected from known separators. As the separator, it is possible to use, for example, a separator composed of only a substrate layer, or a separator that includes a heat resistant layer formed on one surface or both surfaces of a substrate layer and containing heat resistant particles and a binder. Examples of a form of the substrate layer of the separator include a woven fabric, a nonwoven fabric, and a porous resin film. Among these forms, a porous resin film is preferable from the viewpoint of strength, and a nonwoven fabric is preferable from the viewpoint of properties of retaining a solution of a nonaqueous electrolyte. As a material for the substrate layer of the separator, polyolefins such as polyethylene and polypropylene are preferable from the viewpoint of a shutdown function, and, for example, a polyimide and an aramid are preferable from the viewpoint of resistance to oxidative decomposition. As the substrate layer of the separator, a composite material of these resins may also be used.

The heat resistant particles contained in the heat resistant layer have preferably a mass loss of 5% or less when heated from room temperature to 500°C in an air atmosphere of 1 atm, more preferably a mass loss of 5% or less when heated from room temperature to 800°C. Examples of a material having the prescribed mass loss or less include an inorganic compound. Examples of the inorganic compound include: oxides such as iron oxide, silicon oxide, aluminum oxide, titanium oxide, zirconium oxide, calcium oxide, strontium oxide, barium oxide, magnesium oxide, and aluminosilicate; nitrides such as aluminum nitride and silicon nitride; carbonates such as calcium carbonate; sulfates such as barium sulfate; hardly soluble ionic crystals such as calcium fluoride, barium fluoride, and barium titanate; covalently bonded crystals such as silicon and diamond; and substances derived from mineral resources, such as talc, montmorillonite, boehmite, zeolite, apatite, kaolin, mullite, spinel, olivine, sericite, bentonite, and mica, or artificial products thereof. As the inorganic compound, simple substances or composites of these substances may be used alone, or two or more thereof may be used in mixture. Among these inorganic compounds, silicon oxide, aluminum oxide, or aluminosilicate is preferable from the viewpoint of safety of the energy storage device.

The separator has a porosity of preferably 80% by volume or less from the viewpoint of strength, and preferably 20% by volume or more from the viewpoint of discharge performance. Here, the term "porosity" is a volume-based value, and means a value measured with a mercury porosimeter.

As the separator, a polymer gel composed of a polymer and a nonaqueous electrolyte may also be used. Examples of the polymer include polyacrylonitrile, polyethylene oxide, polypropylene oxide, polymethyl methacrylate, polyvinyl acetate, polyvinylpyrrolidone, and polyvinylidene fluoride. The use of the polymer gel has an effect of suppressing liquid leakage. As the separator, the polymer gel may be used in combination with the porous resin film, the nonwoven fabric, or the like described above.

### (Nonaqueous electrolyte)

The nonaqueous electrolyte can be appropriately selected from known nonaqueous electrolytes. For the nonaqueous electrolyte, a nonaqueous electrolyte solution may be used. The nonaqueous electrolyte solution contains a nonaqueous solvent and an electrolyte salt dissolved in the nonaqueous solvent.

The nonaqueous solvent can be appropriately selected from known nonaqueous solvents. Examples of the nonaqueous solvent include a cyclic carbonate, a chain carbonate, a carboxylic acid ester, a phosphoric acid ester, a sulfonic acid ester, an ether, an amide, and a nitrile. As the nonaqueous solvent, one obtained by substituting, with a halogen, a part of hydrogen atoms contained in these compounds may be used.

Examples of the cyclic carbonate include ethylene carbonate (EC), propylene carbonate (PC), butylene carbonate (BC), vinylene carbonate (VC), vinylethylene carbonate (VEC), chloroethylene carbonate, fluoroethylene carbonate (FEC), difluoroethylene carbonate (DFEC), styrene carbonate, 1-phenylvinylene carbonate, and 1,2-diphenylvinylene carbonate. Among these examples, EC is preferable.

Examples of the chain carbonate include diethyl carbonate (DEC), dimethyl carbonate (DMC), ethyl methyl carbonate (EMC), diphenyl carbonate, trifluoroethyl methyl carbonate, and bis(trifluoroethyl)carbonate. Among these examples, EMC is preferable.

As the nonaqueous solvent, it is preferable to use a cyclic carbonate or a chain carbonate, and it is more preferable to use a cyclic carbonate and a chain carbonate in combination. By using a cyclic carbonate, it is possible to promote dissociation of an electrolyte salt and thus improve the ionic conductivity of the nonaqueous electrolyte solution. By using a chain carbonate, it is possible to keep low the viscosity of the nonaqueous electrolyte solution. When a cyclic carbonate and a chain carbonate are used in combination, the volume ratio between the cyclic carbonate and the chain carbonate (cyclic carbonate : chain carbonate) is preferably set to, for example, a range from 5 : 95 to 50 : 50.

The electrolyte salt can be appropriately selected from known electrolyte salts. Examples of the electrolyte salt include a lithium salt, a sodium salt, a potassium salt, a magnesium salt, and an onium salt. Among these examples, a lithium salt is preferable.

Examples of the lithium salt include inorganic lithium salts such as LiPF₆, LiPO₂F₂, LiBF₄, LiClO₄, and LiN(SO₂F)₂, lithium oxalates such as lithium bis(oxalate)borate (LiBOB), lithium difluorooxalatoborate (LiFOB), and lithium bis(oxalate)difluorophosphate (LiFOP), and lithium salts having a halogenated hydrocarbon group, such as LiSO₃CF₃, LiN(SO₂CF₃)₂, LiN(SO₂C₂F₅)₂, LiN(SO₂CF₃)(SO₂C₄F₉), LiC(SO₂CF₃)₃, and LiC(SO₂C₂F₅)₃. Among these examples, an inorganic lithium salt is preferable, and LiPF₆ is more preferable.

The content of the electrolyte salt in the nonaqueous electrolyte solution is, at 20°C and 1 atm, preferably 0.1 mol/dm³ or more and 2.5 mol/dm³ or less, more preferably 0.3 mol/dm³ or more and 2.0 mol/dm³ or less, still more preferably 0.5 mol/dm³ or more and 1.7 mol/dm³ or less, particularly preferably 0.7 mol/dm³ or more and 1.5 mol/dm³ or less. By setting the content of the electrolyte salt to the above range, the ionic conductivity of the nonaqueous electrolyte solution can be increased.

The nonaqueous electrolyte solution may contain an additive other than the nonaqueous solvent and the electrolyte salt. Examples of the additive include halogenated carbonic acid esters such as fluoroethylene carbonate (FEC) and difluoroethylene carbonate (DFEC); oxalates such as lithium bis(oxalate)borate (LiBOB), lithium difluorooxalatoborate (LiFOB), and lithium bis(oxalate)difluorophosphate (LiFOP); imide salts such as lithium bis(fluorosulfonyl)imide (LiFSI); aromatic compounds such as biphenyl, an alkyl biphenyl, terphenyl, partly hydrogenated terphenyl, cyclohexylbenzene, t-butylbenzene, t-amylbenzene, diphenyl ether, and dibenzofuran; partial halides of the aromatic compounds, such as 2-fluorobiphenyl, o-cyclohexylfluorobenzene, and p-cyclohexylfluorobenzene; halogenated anisole compounds such as 2,4-difluoroanisole, 2,5-difluoroanisole, 2,6-difluoroanisole, and 3,5-difluoroanisole; vinylene carbonate, methylvinylene carbonate, ethylvinylene carbonate, succinic anhydride, glutaric anhydride, maleic anhydride, citraconic anhydride, glutaconic anhydride, itaconic anhydride, and cyclohexanedicarboxylic anhydride; ethylene sulfite, propylene sulfite, dimethyl sulfite, methyl methanesulfonate, busulfan, methyl toluenesulfonate, dimethyl sulfate, ethylene sulfate, sulfolane, dimethyl sulfone, diethyl sulfone, dimethylsulfoxide, diethylsulfoxide, tetramethylene sulfoxide, diphenyl sulfide, 4,4'-bis(2,2-dioxo-1,3,2-dioxathiolane), 4-methylsulfonyloxymethyl-2,2-dioxo-1,3,2-dioxathiolane, thioanisole, diphenyl disulfide, dipyridinium disulfide, 1,3-propenesultone, 1,3-propanesultone, 1,4-butanesultone, 1,4-butenesultone, perfluorooctane, tristrimethylsilyl borate, tristrimethylsilyl phosphate, tetrakistrimethylsilyl titanate, lithium monofluorophosphate, and lithium difluorophosphate. One of these additives may be used alone, or two or more thereof may be used in mixture.

The content of the additive contained in the nonaqueous electrolyte solution is preferably 0.01% by mass or more and 10% by mass or less, more preferably 0.1% by mass or more and 7% by mass or less, still more preferably 0.2% by mass or more and 5% by mass or less, particularly preferably 0.3% by mass or more and 3% by mass or less, with respect to the total mass of the nonaqueous electrolyte solution. By setting the content of the additive to the above range, it is possible to improve the capacity retention performance or cycle performance after high-temperature storage, and to further improve the safety.

As the nonaqueous electrolyte, a solid electrolyte may be used, or the nonaqueous electrolyte solution and a solid electrolyte may be used in combination.

The solid electrolyte can be selected from any materials, such as lithium, sodium, and calcium, which have ionic conductivity and are solid at normal temperature (for example, 15°C to 25°C). Examples of the solid electrolyte include a sulfide solid electrolyte, an oxide solid electrolyte, a nitride solid electrolyte, and a polymer solid electrolyte.

Examples of the sulfide solid electrolyte include, in the case of a lithium ion secondary battery, Li₂S-P₂S₅, LiI-Li₂S-P₂S₅, and Li₁₀Ge-P₂S₁₂.

The form of the energy storage device according to the present embodiment is not particularly limited, and examples of the form include a cylindrical battery, a prismatic battery, a flat battery, a coin battery, and a button battery.

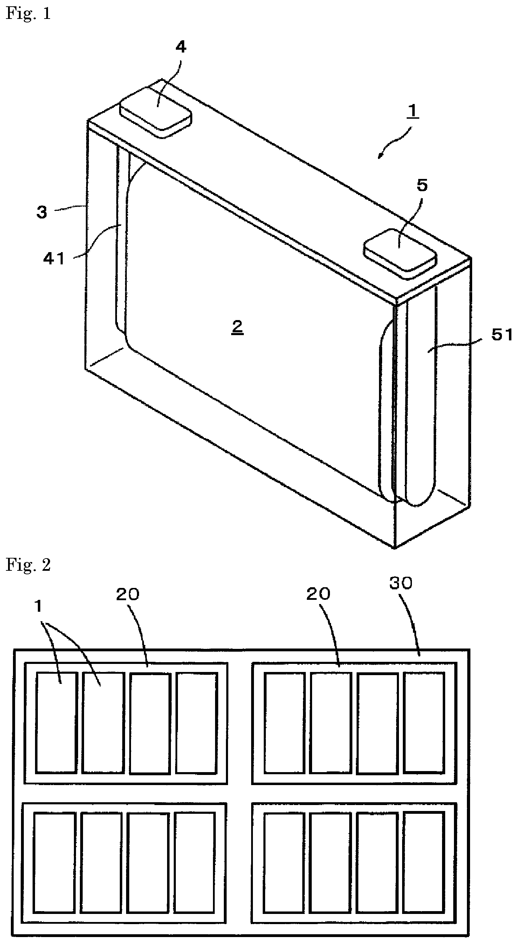

Fig. 1 illustrates an energy storage device 1 as one example of the prismatic battery. The same drawing is a see-through view of a case. An electrode assembly 2 including a positive electrode and a negative electrode wound with a separator interposed therebetween is housed in a prismatic case 3. The positive electrode is electrically connected to a positive electrode terminal 4 via a positive electrode lead 41. The negative electrode is electrically connected to a negative electrode terminal 5 via a negative electrode lead 51.

### <Energy storage apparatus>

The energy storage device according to the present embodiment can be mounted as an energy storage unit (battery module), which is formed by putting together a plurality of energy storage devices, on, for example, a power source for motor vehicles such as an electric vehicle (EV), a hybrid vehicle (HEV), and a plug-in hybrid vehicle (PHEV), a power source for electronic devices such as a personal computer and a communication terminal, or a power source for power storage. In this case, the technique of the present invention may be applied to at least one energy storage device included in the energy storage unit.

Fig. 2 illustrates one example of an energy storage apparatus 30 formed by putting together energy storage units 20 each of which is formed by putting together two or more energy storage devices 1 electrically connected to each other. The energy storage apparatus 30 may include, for example, a busbar (not illustrated) electrically connecting the two or more energy storage devices 1, and a busbar (not illustrated) electrically connecting the two or more energy storage units 20. An energy storage unit 20 or the energy storage apparatus 30 may include a state monitor (not illustrated) that monitors the state of one or more energy storage devices.

### <Method for manufacturing energy storage device>

A method, according to the present embodiment, for manufacturing an energy storage device can be appropriately selected from known methods. The manufacturing method includes, for example, preparing an electrode assembly, preparing an electrolyte, and housing the electrode assembly and the electrolyte in a case. The preparing an electrode assembly includes: preparing a positive electrode and a negative electrode, and forming an electrode assembly by stacking or winding the positive electrode and the negative electrode with a separator interposed therebetween.

The housing the electrolyte in a case can be appropriately selected from known methods. For example, when a nonaqueous electrolyte solution is used for the electrolyte, the nonaqueous electrolyte solution may be injected from an inlet formed in the case, followed by sealing the inlet.

### <Other embodiments>

The negative electrode for an energy storage device, and the energy storage device according to the present invention are not limited to the embodiment described above, and various changes may be made without departing from the scope of the present invention as defined in the appended claims. For example, a configuration of an embodiment can have a configuration of another embodiment added thereto, and a part of a configuration of an embodiment can be replaced by a configuration of another embodiment or a well-known technique. Further, a part of a configuration of an embodiment can be removed. In addition, a well-known technique can be added to a configuration of an embodiment.

In the embodiment described above, using the energy storage device as a nonaqueous electrolyte secondary battery (for example, a lithium ion secondary battery) capable of being charged and discharged has been described, but the type, form, dimensions, capacity, and the like of the energy storage device are optional. The present invention can also be applied to various secondary batteries, and capacitors such as an electric double layer capacitor and a lithium ion capacitor. In addition, the energy storage device according to the present invention can also be applied as an energy storage device including, as the electrolyte, an electrolyte other than the nonaqueous electrolyte, that is, for example, an energy storage device that includes an electrolyte containing water.

In the embodiment described above, the electrode assembly including a positive electrode and a negative electrode stacked with a separator interposed therebetween has been described, but the electrode assembly does not have to include a separator. For example, the positive electrode and the negative electrode may be in direct contact with each other, with a non-conductive layer formed on an active material layer of a positive electrode or a negative electrode.

### EXAMPLES

Hereinafter, the present invention will be described further specifically with reference to examples, but the present invention is not to be limited to the following examples.

### [Example 1]

### (Production of negative electrode)

Graphite as a negative active material, carboxymethyl cellulose (CMC-A) as a cellulose derivative, styrene-butadiene rubber (SBR-A) as binder particles (particulate binder), and water as a dispersion medium were mixed to prepare a negative composite paste. The mass ratio between the graphite, the CMC-A, and the SBR-A was set to 98 : 1: 1 (in terms of solid content). The negative composite paste was applied to both surfaces of a copper foil as a negative substrate, and dried. Thereafter, roll pressing was performed to obtain a negative electrode of Example 1. The cellulose derivative (CMC-A) in the negative active material layer of the obtained negative electrode had a peak top molecular weight of 2,520,000. The binder particles (SBR-A) had an average circularity of 0.93 and an average particle size of 210 nm. The negative active material layer had a density of 1.3 g/cm³.

### (Production of positive electrode)

A positive composite paste was prepared using LiNi_{3/5}Co_{1/5}Mn_{1/5}O₂ as a positive active material, acetylene black (AB) as a conductive agent, a polyvinylidene fluoride (PVDF) as a binder, and N-methylpyrrolidone (NMP) as a dispersion medium. The mass ratio between the positive active material, the AB, and the PVDF was set to 93 : 4 : 3 (in terms of solid content). The positive composite paste was applied to both surfaces of an aluminum foil as a positive substrate, and dried. Thereafter, roll pressing was performed to obtain a positive electrode.

### (Preparation of nonaqueous electrolyte solution)

LiPF₆ was dissolved at a concentration of 1.0 mol/dm³ in a solvent obtained by mixing ethylene carbonate and ethyl methyl carbonate at a volume ratio of 30 : 70, to prepare a nonaqueous electrolyte solution.

### (Production of energy storage device)

An electrode assembly was produced using the negative electrode, the positive electrode, and a separator, and housed with the nonaqueous electrolyte solution in a case to obtain an energy storage device of Example 1. As the separator, a polyolefin microporous membrane was used.

### [Examples 2 and 3 and Comparative Examples 1 to 4]

Negative electrodes and energy storage devices of Examples 2 and 3 and Comparative Examples 1 to 4 were obtained similarly to Example 1 except the the cellulose derivative and the binder particles used for producing the negative electrode were changed as shown in Table 1.

The CMC-B in Table 1 was CMC having a peak top molecular weight of 3,180,000. The CMC-C was CMC having a peak top molecular weight of 280,000. The SBR-B was SBR particles having an average circularity of 0.90 and an average particle size of 180 nm. The SBR-C was SBR particles having an average circularity of 0.86 and an average particle size of 210 nm.

### (Initial charge-discharge)

Each of the obtained energy storage devices was subjected to constant current charge at 25°C, with the charge current set to 1.0 C and the end-of-charge voltage to 4.20 V, and then subjected to constant voltage charge at 4.20 V. A charge termination condition was a total charge time of 3 hours. This was followed by a break period of 10 minutes. Thereafter, the energy storage device was subjected to constant current discharge, with the discharge current set to 1.0 C and the end-of-discharge voltage to 2.75 V. In the discharge capacity measured thereby, 100% of the electric quantity was defined as SOC 100%, and 50% of the electric quantity as SOC 50%.

### (Evaluation: resistance)

Each of the obtained energy storage devices was subjected to constant current charge at a current of 1.0 C at 25°C to bring the SOC to 50%. The energy storage device was stored in a thermostatic bath at -10°C for 4 hours, and then discharged at a current of 0.1 C, 0.2 C, or 0.3 C for 30 seconds. After the completion of each of the discharges, the energy storage device was subjected to constant current charge at a current of 1.0 C to bring the SOC to 50%. The relationship between the current in each of the discharges and the voltage at 10 seconds after the start of the discharge was plotted, and the resistance was determined from the slope of a straight line obtained from the plot of the three points. The determined resistance was compared between the energy storage devices including the same cellulose derivative. Table 1 shows the resistance as a relative value determined using, as the standard (100%), the resistance of the energy storage devices including SBR-B as the binder particles. That is, Examples 1 and 2 and Comparative Example 1 are represented by relative values based on Example 2. Comparative Examples 2 to 4 are represented by relative values based on Comparative Example 3. Example 3 has neither an example nor a comparative example with which Example 3 is to be compared.

### (Evaluation: coulombic efficiency)

Subsequently, each of the energy storage devices was subjected to constant current charge at a current of 3.0 C to a voltage corresponding to SOC 100% in a thermostatic bath at 25°C, and then subjected to constant current discharge at a current of 3.0 C to a voltage corresponding to SOC 0%. The charge and the discharge were each followed by a break time of 10 minutes. Ten cycles of the charge and the discharge described above were performed. The percentage of the discharge capacity of the 10th cycle with respect to the charge capacity of the 10th cycle in this charge-discharge cycle test was determined as the coulombic efficiency. Table 1 shows the determined coulombic efficiencies.

**[Table 1]**

| | Cellulose derivative | | Binder particles | | Evaluation | |
|---|---|---|---|---|---|---|
| | - | Peak top molecular weight | - | Average circularity | Resistance (Relative value) /% | Coulombic efficiency /% |
| Example 1 | CMC-A | 2,520,000 | SBR-A | 0.93 | 97.3 | 100.0 |
| Example 2 | CMC-A | 2,520,000 | SBR-B | 0.90 | 100.0 | 100.0 |
| Comparative Example 1 | CMC-A | 2,520,000 | SBR-C | 0.86 | 101.1 | 100.0 |
| Comparative Example 2 | CMC-B | 3,180,000 | SBR-A | 0.93 | 99.5 | 99.6 |
| Comparative Example 3 | CMC-B | 3,180,000 | SBR-B | 0.90 | 100.0 | 99.8 |
| Comparative Example 4 | CMC-B | 3,180,000 | SBR-C | 0.86 | 100.0 | 99.6 |
| Example 3 | CMC-C | 280,000 | SBR-B | 0.90 | 100.0 | 100.0 |

As shown in Table 1, the coulombic efficiency of the energy storage devices of Examples 1 to 3 and Comparative Example 1 including a cellulose derivative having a peak top molecular weight of 2,800,000 or less was 100.0%. From the comparison or the like between Examples 1 and 2 and Comparative Example 1, the resistance of the energy storage devices can be confirmed to be decreased along with an increase of the average circularity of the binder particles. From these results, it is understood that a negative electrode that includes a cellulose derivative having a peak top molecular weight of 2,800,000 or less and binder particles having an average circularity of 0.90 or more is capable of increasing the coulombic efficiency and decreasing the resistance of an energy storage device.

After each of the energy storage devices was disassembled after the evaluation of coulombic efficiency, deposition of metal lithium was visually observed on the surface of the negative electrode in the energy storage devices of Comparative Examples 2 to 4 having a low coulombic efficiency. On the other hand, no deposition of metal lithium was visually observed on the surface of the negative electrode in the energy storage devices of Examples 1 to 3 having a high coulombic efficiency. From these results, the energy storage devices of Examples 1 to 3 having a high coulombic efficiency can be determined to also have excellent charge acceptance performance.

Meanwhile, the cellulose derivatives used were also measured for the weight average molecular weight as well as the peak top molecular weight by the GPC measurement described above, and the weight average molecular weight of the CMC-A was higher than the weight average molecular weight of the CMC-B. The correlationship between the peak top molecular weight and the weight average molecular weight of a cellulose derivative is low, and the effects of the present invention are considered to attribute to a cellulose derivative having a low peak top molecular weight.

### (Evaluation: charge-discharge cycle performance)

Next, in order to study the influence of the peak top molecular weight on the charge-discharge cycle performance, each of the energy storage devices of Example 2, Comparative Example 3, and Example 3 including binder particles having the identical average circularity was subjected to a charge-discharge cycle test after the evaluations of the initial charge-discharge and the resistance. The energy storage device was subjected to constant current charge at a current of 1.0 C to a voltage corresponding to SOC 100% in a thermostatic bath at 45°C, and then subjected to constant current discharge at a current of 1.0 C to a voltage corresponding to SOC 0%. The charge and the discharge were each followed by a break time of 10 minutes. Three hundred cycles of the charge and the discharge described above were performed. The percentage of the discharge capacity of the 300th cycle with respect to the discharge capacity of the 1st cycle in the charge-discharge cycle test was determined as the capacity retention ratio. Table 2 shows the determined capacity retention ratios.

**[Table 2]**

| | Cellulose derivative | | Binder particles | | Evaluation |
|---|---|---|---|---|---|
| | - | Peak top molecular weight | - | Average circularity | Capacity retention ratio /% |
| Example 2 | CMC-A | 2,520,000 | SBR-B | 0.90 | 95.5 |
| Comparative Example 3 | CMC-B | 3,180,000 | SBR-B | 0.90 | 94.4 |
| Example 3 | CMC-C | 280,000 | SBR-B | 0.90 | 94.9 |

As shown in Table 2, it is understood that the use of a cellulose derivative that has a not too low peak top molecular weight is more preferable in terms of charge-discharge cycle performance. This is presumed that the use of the cellulose derivative that had a not too low peak top molecular weight enabled the preparation of a good negative composite paste, and due to the suppression of aggregation of the binder particles, the negative active material layer improved the uniformity and the adhesiveness with the negative substrate.

### INDUSTRIAL APPLICABILITY

The present invention can be applied, for example, to an energy storage device used as a power source for electronic devices, such as a personal computer and a communication terminal, motor vehicles, and the like, and to a negative electrode for the energy storage device.

### DESCRIPTION OF REFERENCE SIGNS

1: Energy storage device
2: Electrode assembly
3: Case
4: Positive electrode terminal
41: Positive electrode lead
5: Negative electrode terminal
51: Negative electrode lead
20: Energy storage unit
30: Energy storage apparatus

## Claims

1. A negative electrode for an energy storage device, the negative electrode comprising a negative active material layer containing a negative active material, a cellulose derivative, and binder particles, wherein a peak-top molecular weight of the cellulose derivative is 2,800,000 or less, and an average circularity of the binder particles is 0.90 or more, wherein the peak-top molecular weight is measured by a Gel Permeation Chromatography method as disclosed in the description, and wherein the circularity is measured by a Scanning Electron Microscopy method as disclosed in the description.

2. The negative electrode according to claim 1, wherein the negative active material is a carbon material, and the negative active material layer contains 90% by mass or more of the negative active material.

3. The negative electrode according to claim 1, wherein the binder particles include styrene-butadiene rubber particles.

4. The negative electrode according to claim 1, wherein the cellulose derivative contains carboxymethyl cellulose.

5. An energy storage device comprising the negative electrode according to any one of claims 1 to 4.

## Patentansprüche

1. Negative Elektrode für eine Energiespeichervorrichtung, wobei die negative Elektrode eine Negativ-Aktivmaterial-Schicht umfasst, die ein Negativ-Aktivmaterial, ein Cellulosederivat und Bindemittelpartikel enthält, wobei ein Peak-Spitzenmolekulargewicht des Cellulosederivats 2 800 000 oder weniger beträgt und eine mittlere Rundheit der Bindemittelpartikel 0,90 oder mehr beträgt, wobei das Peak-Spitzenmolekulargewicht mit einem Gelpermeationschromatographie-Verfahren wie in der Beschreibung offenbart gemessen wird, und wobei die Rundheit mit einem Rasterelektronenmikroskopie-Verfahren wie in der Beschreibung offenbart gemessen wird.

2. Negative Elektrode nach Anspruch 1, wobei das Negativ-Aktivmaterial ein Kohlenstoffmaterial ist und die Negativ-Aktivmaterial-Schicht 90 Masse-% oder mehr von dem Negativ-Aktivmaterial enthält.

3. Negative Elektrode nach Anspruch 1, wobei die Bindemittelpartikel Styren-Butadien-Kautschuk-Partikel umfassen.

4. Negative Elektrode nach Anspruch 1, wobei das Cellulosederivat Carboxymethylcellulose enthält.

5. Energiespeichervorrichtung, umfassend die negative Elektrode nach einem der Ansprüche 1 bis 4.

## Revendications

1. Électrode négative pour un dispositif de stockage d'énergie, l'électrode négative comprenant une couche de matériau actif négatif contenant un matériau actif négatif, un dérivé de cellulose et des particules de liant, dans laquelle une masse moléculaire au sommet du pic du dérivé de cellulose est de 2 800 000 ou moins, et une circularité moyenne des particules de liant est de 0,90 ou plus, dans laquelle la masse moléculaire au sommet du pic est mesurée par une méthode de chromatographie par perméation de gel telle que divulguée dans la description, et dans laquelle la circularité est mesurée par une méthode de microscopie électronique à balayage telle que divulguée dans la description.

2. Électrode négative selon la revendication 1, dans laquelle le matériau actif négatif est un matériau carboné, et la couche de matériau actif négatif contient 90 % en masse ou plus du matériau actif négatif.

3. Électrode négative selon la revendication 1, dans laquelle les particules de liant incluent des particules de caoutchouc styrène-butadiène.

4. Électrode négative selon la revendication 1, dans laquelle le dérivé de cellulose contient de la carboxyméthylcellulose.

5. Dispositif de stockage d'énergie comprenant l'électrode négative selon l'une quelconque des revendications 1 à 4.
